# EUROPÄISCHE PATENTANMELDUNG

(11) **EP 2 871 736 A1**
(43) Veröffentlichungstag der Anmeldung: **13.05.2015**
(21) Anmeldenummer: 13192380.7
(22) Anmeldetag: 11.11.2013
(51) Int. Cl.: H02G 1/12

(54) **Anlage zur Bearbeitung eines mehradrigen Kabels**

(71) Anmelder: Schleuniger Holding AG, 3608 Thun (CH)
(72) Erfinder: Messina, Carmelo, 6340 Baar (CH)
(74) Vertreter: Patentbüro Paul Rosenich AG

(57) **Zusammenfassung**

Eine Anlage zur Bearbeitung eines mehradrigen Kabels (2), insbesondere eines Kabels mit Schirm und/oder die inneren Leiter (2a) umhüllender Folie und/oder innenliegendem Füller, umfasst eine Mehrzahl von Stationen (3, 5 bis 11) für jeweils wenigstens einen Bearbeitungsschritt des Abmantelns, Öffnens, Kürzens und Zurückstülpens eines allfälligen Schirms, Entfernen einer allfälligen Folie und Entfernen eines allfälligen innenliegende Füllers. Weiters ist eine Transportvorrichtung für die abgelängten Kabeln von und zu den Stationen (3, 5 bis 11) vorgesehen, ebenso wie zumindest eine Steuereinrichtung. Das Transportsystem verbindet die Stationen (3, 5 bis 11) in der Reihenfolge Abmanteln, Öffnen eines allfälligen Schirms, Kürzen und Zurückstülpen eines allfälligen Schirms, Entfernen einer allfälligen Folie und Entfernen eines allfälligen innenliegenden Füllers, wobei alle Stationen (3, 5 bis 11) vollautomatisch betreibbar sind.

## Beschreibung

Die Erfindung betrifft eine Anlage zur Bearbeitung eines mehradrigen Kabels, insbesondere eines Kabels mit Schirm und/oder die inneren Leiter umhüllender Folie und/oder innenliegendem Füller, umfassend eine Mehrzahl von Stationen für jeweils wenigstens einen Bearbeitungsschritt des Abmantelns, Öffnens, Kürzens und Zurückstülpens eines allfälligen Schirms, Entfernen einer allfälligen Folie und Entfernen eines allfälligen innenliegenden Füllers, sowie eine Transportvorrichtung zum Transport von abgelängten Kabeln von und zu den Stationen sowie zu einer im Verarbeitungsprozess nachfolgenden vorzugsweise vollautomatischen Verarbeitungsanlage, sowie zumindest eine Steuereinrichtung für die Anlage bzw. die einzelnen Stationen, nach dem Oberbegriff des Anspruchs 1.

Die Bearbeitung von mehradrigen Kabeln, die insbesondere mit einem Schirmgeflecht und einer äusseren Ummantelung, allenfalls auch mit einer die Adern umhüllenden Folie und/oder einem zentralen Füller, versehen sind, umfasst zumindest einen der Verfahrensschritte Ablängen, Abmanteln der Leitung, Kürzen und Zurückstülpen des Schirms, Entfernen der Folie und Entfernen des innenliegenden Füllers.

Dabei stellen insbesondere HSD (High Speed Data)-Produkte sehr hohe Anforderungen an den Verarbeitungsprozess. So ist es derzeit noch nicht möglich, HSD-Kabel komplett vollautomatisch zu bearbeiten. Aktuell werden die Verarbeitungsschritte Abmanteln, Schirmgeflecht schneiden und zurückstülpen, Folie sowie Füller entfernen manuell oder halbautomatisch auf einzelnen Stationen durchgeführt. Erst die weitere Verarbeitung erfolgt dann auf einem Vollautomaten. Auch der Bearbeitungsschritt des Schneidens des Schirms wird derzeit bestenfalls halbautomatisch durchgeführt.

Aufgabe der vorliegenden Erfindung ist es somit, eine Anlage für die vollautomatische Vorbearbeitung von Kabeln, insbesondere für HSD-Produkte, auszugestalten. Damit soll auch die Verbindung eines Vollautomaten für die Verarbeitung von zumindest an einem Ende vorbereiteten Kabeln mit der vollautomatischen Anlage zur Kabelvorbearbeitung und somit eine durchgängig vollautomatische Kabelbearbeitung vom Ablängen bis hin zum fertigen Produkt ermöglicht werden.

Die Aufgabe wird durch die Merkmale des unabhängigen Anspruchs 1 gelöst. Vorteilhafte Weiterbildungen sind in den Figuren und in den abhängigen Patentansprüchen dargelegt.

Gemäss der Erfindung verbindet das Transportsystem die Stationen in der Reihenfolge Abmanteln, Öffnen eines allfälligen Schirms, Kürzen und Zurückstülpen eines allfälligen Schirms, Entfernen einer allfälligen Folie und Entfernen eines allfälligen innenliegenden Füllers und sind alle Stationen vollautomatisch betreibbar. Damit ist die notwendige Bearbeitungsreihenfolge ohne Notwendigkeit eines Benutzereingriffs sichergestellt und durch die vollautomatische Betreibbarkeit der einzelnen Stationen auch der vollautomatische gesamte Bearbeitungsablauf der Kabelvorbearbeitung sichergestellt. Die erfindungsgemässe Anlage kann daher vorteilhafterweise im Produktionsablauf vor jede vollautomatische Kabelbearbeitungsanlage gesetzt werden und erlaubt dann die vollautomatische, rasche Produktion vom Ablängen der Kabelstücke bis hin zum fertigen, mit allen Steckern und Verbindern ausgestatteten Produkt.

Jedenfalls vor der Übergabe an die Verarbeitungsanlage, gegebenenfalls vor einer Station zum Entfernen eines allfälligen innenliegende Füllers, ist eine weitere Station zum vollautomatischen lagerichtigen Ausrichten des Kabels vorgesehen. Damit ist die optimale Ausrichtung des Kabels bei Übergabe an die Kabelbearbeitungsanlage sichergestellt.

Vorteilhafterweise umfasst die Station zur lagerichtigen Ausrichtung des Kabels eine Sensoranordnung sowie eine Klemmvorrichtung zur lagerichtigen Fixierung beim Weitertransport und bei der Übergabe an die nachfolgende Verarbeitungsanlage.

Bevorzugt ist dabei vorgesehen, dass die Sensoranordnung eine seitlich des abgemantelten Endes des zu bearbeitenden Kabels beabstandete Farberkennungseinrichtung, vorzugsweise eine Farb-Kamera, umfasst, deren Beobachtungsstrahl gegenüber einer vorgegebenen Ebene, in welcher im Bearbeitungsbetrieb zumindest zwei Leiter nebeneinander liegen, um einen Winkel zwischen 20 und 75° versetzt ist, vorzugsweise um 45°. Damit kann das Kabel mit weniger Drehvorgängen in die korrekte Position für die Übergabe an die Kabelbearbeitungsanlage gebracht werden.

Gemäss einer vorteilhaften Variante ist vorgesehen, dass in der Steuereinrichtung der Station zur lagerichtigen Ausrichtung des Kabels, allenfalls in Form eines Moduls einer übergeordneten Anlagensteuerung, ein weiterer Ablauf implementiert ist, in welchem im Bearbeitungsmodus das von der Farberkennungseinrichtung ermittelte Farbmuster der nebeneinanderliegenden, freigelegten Leiterenden mit einem vorgegebenen Muster verglichen und das Kabel solange gedreht wird, bis die Anordnung der Leiterenden mit dem vorgegebenen Muster übereinstimmt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: ein Schema einer erfindungsgemässen Anlage gemäss einer vorteilhaften Ausführungsform unter Einbeziehung aller wesentlichen Bearbeitungsstationen,
- Fig. 2a: eine schematische Darstellung einer Kamera und des davon aufgenommenen Kabels wie in anderem Zusammenhang in der Kabelbearbeitung üblich,
- Fig. 2b: das von der Kamera gemäss Fig. 2a aufgenommene Bild des Kabelendes,
- Fig. 3a: eine schematische Darstellung einer Kamera und des davon aufgenommenen Kabels gemäss der vorliegenden Erfindung, und
- Fig. 3b: das von der Kamera gemäss Fig. 3a aufgenommene Bild des Kabelendes.

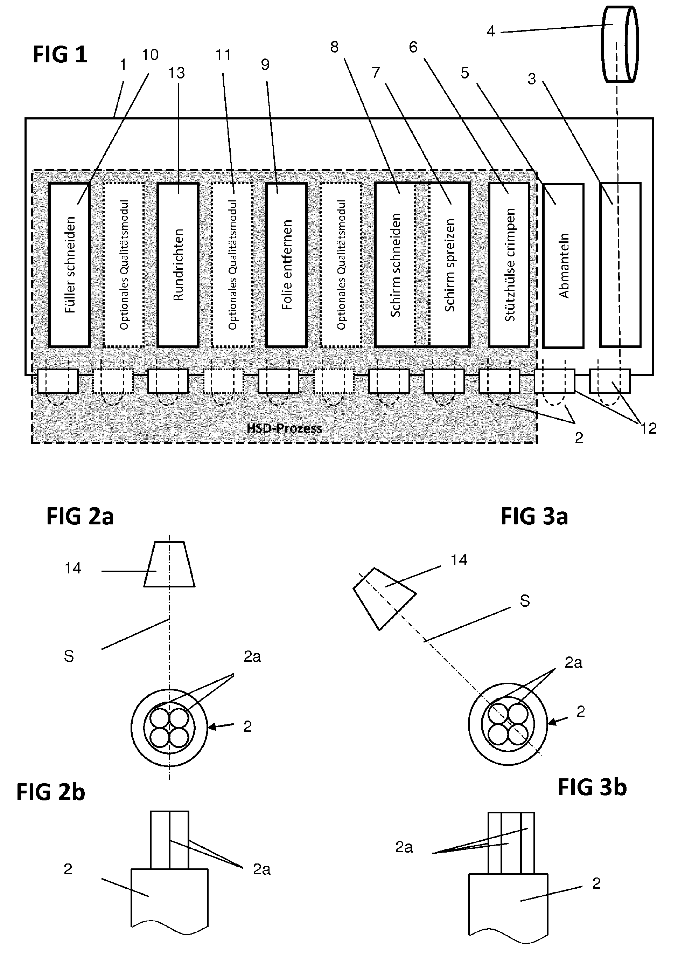

Das in Fig. 1 anhand eines Anlagenschemas dargestellte Ausführungsbeispiel einer erfindungsgemässen Anlage 1 für die Vorbereitung von zumindest einem Ende eines abgelängten Kabels 2 zum Aufbringen eines Steckers oder sonstigen Verbindungselementes in einer prozessmässig nachfolgenden Kabelbearbeitungsanlage. Die Gruppe der möglichen und in voller Anzahl vorteilhaften Stationen umfasst vollautomatische Stationen für jeweils einen Bearbeitungsschritt im Vorbereitungsprozess des Kabels 2, insbesondere für das Ablängen 3 des von einer Spule 4 oder aus einem sonstigen Vorratsbehälter kommenden Kabels, das Abmanteln 5 von zumindest einem Kabelende, gegebenenfalls das Aufbringen 6 einer Stützhülse, das Öffnen 7, Kürzen 8 und gegebenenfalls das Zurückstülpen eines allfälligen Schirms, das Entfernen einer allfälligen Folie 9 um die innenliegenden Leiter und das Entfernen 10 eines allfälligen innenliegenden Füllers. Die Stationen 7 und 8 zum Öffnen und Kürzen des Schirms können auch vorzugsweise in einer Station zusammengefasst sein. Auch Stationen 11 für die Qualitätskontrolle können zwischen einzelnen oder allen Stationen 3 und 5 bis 13 vorgesehen sein.

Durch eine automatische Transportvorrichtung werden die abgelängten Kabel 2 von und zu den Stationen 3 bzw. 5 bis 13 sowie vorzugsweise auch gleich zu einer im Verarbeitungsprozess nachfolgenden Verarbeitungsanlage transportiert. Dazu werden sie in Schleifenform auf Transportpaletten 12 geklemmt, mit dem zu bearbeitenden Ende den jeweiligen Bearbeitungsstationen 3 bzw. 5 bis 13 zugewandt. Die Transportpaletten 12 können in einer Endlosschleife geführt werden, vorzugsweise entlang einer geraden Bahn, an welcher auch die oben genannten Stationen 3 bzw. 5 bis 13 in der oben genannten Reihenfolge angeordnet sind. Die Transportvorrichtung als auch die einzelnen Stationen 3 bzw. 5 bis 13 und deren gegenseitiges Zusammenwirken in Form einer Ablaufsteuerung werden durch zumindest eine Steuereinrichtung für die Anlage bewirkt, wobei die Steuereinrichtungen für die Stationen in diesen Stationen 3 bzw. 5 bis 13 selbst als auch als Modul der übergeordneten Anlagensteuerung realisiert sein können.

Besonders vorteilhaft ist die Ergänzung der oben genannten Stationen durch eine weitere Station 13 zum Rundrichten des Kabels 2, d.h. zur vollautomatischen lagerichtigen Ausrichtung des Kabels 2, um dessen optimale Ausrichtung vor Übergabe an die Kabelbearbeitungsanlage sicherzustellen. Die Station 13 zum lagerichtigen Ausrichten des Kabels 2 kann als letzte Station des Vorbereitungsprozesses unmittelbar vor der Übergabe an die nachfolgende Kabelbearbeitungsanlage vorgesehen sein. Vorteilhafterweise ist diese Station aber bereits prozessmässig vorher eingebunden, wenn bei vorhergehenden Bearbeitungsschritten eine lagerichtige Ausrichtung des Kabels 2 notwendig oder vorteilhaft ist. Insbesondere vor der Station 10 zum Entfernen eines allfälligen Füllers, bei welchem die den Füller umgebenden Leiterenden mit Greifern weggebogen werden sollen, ist zum korrekten und beschädigungsfreien Ergreifen der Leiterenden die exakt lagerichtige Ausrichtung des Kabels von Vorteil. Daher wird vorteilhafterweise die Station 13 zum Rundrichten (welcher Begriff synonym zum Begriff des "lagerichtigen Ausrichtens" verwendet wird) bereits vor der Station 10 zum Entfernen des Füllers in die Anlage integriert.

In der Station 10 zum Entfernen eines zentralen Füllers zwischen den Leitern 2a des Kabels 2 ist eine Bearbeitungseinrichtung angeordnet, die für jeden Leiter und/oder jedes Leiterpaar 2a des Kabels 2 zumindest einen bewegbaren Greifer aufweist. Des weiteren ist eine gesonderte Abtrenneinrichtung für den zentralen Füller vorgesehen, um die vollautomatische Abtrennung des überstehenden Endes des zentralen Füllers zu ermöglichen. Vorzugsweise ist jeder Greifer in seinem den Leiter bzw. das Leiterpaar haltenden Zustand um eine im Wesentlichen quer zur Kabelachse orientierte Achse vorzugsweise um einen Winkel von etwa 90° wegschwenkbar, wobei diese Achse vorzugsweise axial in Höhe des vorderen Endes der verbliebenen Umhüllungselemente der Leiter liegt. In der Steuereinrichtung kann ein Ablauf implementiert sein, mit welchem nach Ergreifen der Leiter durch die Greifer und noch vor dem Verschwenken der Greifer eine axiale Relativbewegung zwischen Kabel und Greifern durchführbar ist, die vorzugsweise vom Kabel weg führt. Die Abtrennvorrichtung selbst ist vorzugsweise in Richtung der verschwenkbaren bzw. verschwenkten Greifer axial verfahrbar und weist bevorzugt zwei Schneiden in zangenförmiger Anordnung auf, wobei die beiden Schneiden in je einer Ebene liegen und die beiden Ebenen miteinander einen - gegebenenfalls während der Annäherung veränderlichen - Winkel von zumindest etwa 90° oder kleiner einschliessen. Es kann auch eine Absaugvorrichtung für die abgetrennten Teile des Füllers vorgesehen sein.

In der Steuereinrichtung der Station 10 kann bevorzugt ein Ablauf implementiert sein, um nach Abtrennung des Füllers die Greifer in die Ausgangsstellung beim Ergreifen der Leiter 2a zurück zu schwenken und anschliessend alle Greifer von den Leitern 2a zu lösen, wodurch die Leiterenden 2a automatisch wieder zurück in die nun lagerichtige Position für die weitere Verarbeitung gebracht sind. Eine weitere optionale Ausführungsform sieht dagegen vor, dass ein Ablauf implementiert ist, mittels dem nach Abtrennen des Füllers nur ein Teil der Greifer in die Ausgangsstellung beim Ergreifen der Leiter 2a zurückschwenkbar ist und anschliessend alle Greifer von den Leitern lösbar sind. Dabei ist eben für einen Teil der Leiter die definierte Position durch eine im Wesentlichen axiale Lage gegeben und für einen anderen Teil der Leiter die definierte Position durch die weggebogene Lage gegeben. Alle Leiter 2a sind aber wieder lagerichtig für die weitere Bearbeitung ausgerichtet.

Um das lagerichtige Ausrichten sicher und vollautomatisch durchführen zu können, umfasst die Station 13 eine Sensoranordnung sowie eine Klemmvorrichtung zur lagerichtigen Fixierung beim Weitertransport. Selbstverständlich muss auch eine Vorrichtung zur Drehung des Kabels 2 um seine Achse vorgesehen und mit der Steuerung verbunden sein, um entsprechend der Verarbeitung der Sensorsignale das Kabel in die richtige Lage drehen zu können.

Vorteilhafterweise ist die Sensoranordnung eine seitlich des abgemantelten Endes des zu bearbeitenden Kabels 2 beabstandete Farberkennungseinrichtung, vorzugsweise eine Farb-Kamera 14. Deren Beobachtungsstrahl S ist gegenüber einer typischerweise durch die Gegebenheiten der Anlage, beispielsweise die Ebene der Transportpaletten 12, die Ebenen in welchen die Bearbeitungsvorrichtungen der anderen Stationen bewegbar sind, etc., vorgegebenen Ebene versetzt. In der besagten Ebene liegen im Bearbeitungsbetrieb typischerweise zumindest zwei Leiter 2a nebeneinander, und die Farberkennungseinrichtung ist gegenüber dieser Ebene um einen Winkel zwischen 20 und 75° versetzt, vorzugsweise um 45°.

In der Steuereinrichtung der Station zur lagerichtigen Ausrichtung des Kabels 2, welche ebenfalls wie alle anderen Stations-Steuerungen in Form eines Moduls einer übergeordneten Anlagensteuerung, realisiert sein kann, ist ein weiterer Ablauf implementiert, in welchem im Bearbeitungsmodus das von der Kamera 14 ermittelte Farbmuster der nebeneinanderliegenden, freigelegten Leiterenden 2a mit einem vorgegebenen Muster verglichen und das Kabel 2 solange gedreht wird, bis die Anordnung der Leiterenden 2a mit dem vorgegebenen Muster übereinstimmt.

Besonders vorteilhaft ist die Verwendung der erfindungsgemässen Vorrichtung in einer Anlage zur Bearbeitung eines mehradrigen Kabels 2, insbesondere für HSD-Produkte. Die Vorrichtung kann dabei als eine von mehreren vollautomatischen Bearbeitungsstationen vorgesehen sein, die neben dem Öffnen und Aufstellen des Schirms auch noch das Abmanteln, das Kürzen und Zurückstülpen des Schirms und das Entfernen einer allfälligen Folie bewerkstelligen. Für den vollautomatischen Betrieb ist weiters noch eine Transportvorrichtung zum Transport von abgelängten Kabeln von und zu den Stationen sowie zu einer vorzugsweise ebenfalls vollautomatischen Verarbeitungsanlage vorgesehen.

### Bezugszeichenliste

- 1: Anlage
- 2: Kabel
- 2a: Leiterenden
- 3: Station zum Ablängen
- 4: Kabelspule
- 5: Station zum Abmanteln
- 6: Station zum Stützhülse aufbringen
- 7: Station zum Schirm öffnen
- 8: Station zum Schirm schneiden
- 9: Station zum Enfernen von Folie
- 10: Station zum Füller wegschneiden
- 11: Stationen für Qualitätskontrolle
- 12: Transportpaletten
- 13: Station zum Rundrichten (lagerichtiges Ausrichten des Kabels)
- 14: Farb-Kamera
- S: Beobachtungsstrahl der Kamera

## Patentansprüche

1. Anlage zur Bearbeitung eines mehradrigen Kabels (2), insbesondere eines Kabels mit Schirm und/oder die inneren Leiter (2a) umhüllender Folie und/oder innenliegendem Füller, umfassend eine Mehrzahl von Stationen (3, 5 bis 11) für jeweils wenigstens einen Bearbeitungsschritt des Abmantelns, Öffnens, Kürzens und Zurückstülpens eines allfälligen Schirms, Entfernen einer allfälligen Folie und Entfernen eines allfälligen innenliegenden Füllers, sowie eine Transportvorrichtung zum Transport von abgelängten Kabeln von und zu den Stationen (3, 5 bis 11) sowie zu einer im Verarbeitsprozess nachfolgenden vorzugsweise vollautomatischen Verarbeitungsanlage, sowie zumindest eine Steuereinrichtung für die Anlage bzw. die einzelnen Stationen, **dadurch gekennzeichnet, dass** das Transportsystem die Stationen (3, 5 bis 11) in der Reihenfolge Abmanteln, Öffnen eines allfälligen Schirms, Kürzen und Zurückstülpen eines allfälligen Schirms, Entfernen einer allfälligen Folie und Entfernen eines allfälligen innenliegende Füllers verbindet und alle Stationen (3, 5 bis 11) vollautomatisch betreibbar sind.

2. Anlage nach Anspruch 1, **dadurch gekennzeichnet, dass** jedenfalls vor der Übergabe an die Verarbeitungsanlage, gegebenenfalls vor einer Station (12) zum Entfernen eines allfälligen innenliegenden Füllers, eine weitere Station (13) zum vollautomatischen lagerichtigen Ausrichten des Kabels (2) vorgesehen ist.

3. Anlage nach Anspruch 2, **dadurch gekennzeichnet, dass** die Station (13) zur lagerichtigen Ausrichtung des Kabels (2) eine Sensoranordnung sowie eine Klemmvorrichtung zur lagerichtigen Fixierung des Kabels (2) beim Weitertransport und bei der Übergabe an die nachfolgende Verarbeitungsanlage umfasst.

4. Anlage nach Anspruch 3, **dadurch gekennzeichnet, dass** die Sensoranordnung eine seitlich des abgemantelten Endes des zu bearbeitenden Kabels (2) beabstandete Farberkennungseinrichtung, vorzugsweise eine Farb-Kamera (14), umfasst, deren Beobachtungsstrahl (S) gegenüber einer vorgegebenen Ebene, in welcher im Bearbeitungsbetrieb zumindest zwei Leiter (2a) nebeneinander liegen, um einen Winkel zwischen 20 und 75° versetzt ist, vorzugsweise um 45°.

5. Anlage nach Anspruch 4, **dadurch gekennzeichnet, dass** in der Steuereinrichtung der Station (13) zur lagerichtigen Ausrichtung des Kabels (3), allenfalls in Form eines Moduls einer übergeordneten Anlagensteuerung, ein weiterer Ablauf implementiert ist, in welchem im Bearbeitungsmodus das von der Farberkennungseinrichtung ermittelte Farbmuster der nebeneinanderliegenden, freigelegten Leiterenden (2a) mit einem vorgegebenen Muster verglichen und das Kabel (2) solange gedreht wird, bis die Anordnung der Leiterenden (2a) mit dem vorgegebenen Muster übereinstimmt.
